# EUROPÄISCHE PATENTANMELDUNG

(11) **EP 2 583 553 A1**
(43) Veröffentlichungstag der Anmeldung: **24.04.2013**
(21) Anmeldenummer: 12188298.9
(22) Anmeldetag: 12.10.2012
(51) Int. Cl.: A01M 29/18

(54) **Vorrichtung zum Vertreiben von Tieren, insbesondere Mardern, mit Ultraschall**

(30) Priorität: 20.10.2011 DE 202011051707 U
(71) Anmelder: Rüttgerodt, Werner, 34355 Staufenberg (DE)
(72) Erfinder: Rüttgerodt, Werner, 34355 Staufenberg (DE)
(74) Vertreter: Rehberg Hüppe + Partner

(57) **Zusammenfassung**

Bei einer Vorrichtung (1) zum Vertreiben von Tieren, insbesondere Mardern, mit einer Ultraschallquelle (2), die eine Abstrahlfläche (6) für akustischen Ultraschall aufweist, ist in freiem Abstand vor der Abstrahlfläche (6) ein Schallstreukörper (9) angeordnet, der den akustischen Ultraschall durch Reflektion an seiner schallharten Oberfläche (11) in verschiedene seitliche Richtungen (12) verteilt.

## Beschreibung

### TECHNISCHES GEBIET DER ERFINDUNG

Die Erfindung bezieht sich auf eine Vorrichtung zum Vertreiben von Tieren, insbesondere Mardern, mit Ultraschall, die die Merkmale des Oberbegriffs des unabhängigen Patentanspruchs 1 aufweist.

Derartige Vorrichtungen können zum Beispiel eingesetzt werden, um zu verhindern, dass sich Marder in Motorräumen an Bauteilen aus Gummi oder Kunststoff zu schaffen machen, d. h. diese durch Annagen beschädigen. Ein Einsatz ist auch auf Dachböden möglich, um eine Besiedlung durch Marder und anderer Tiere, wie beispielsweise Siebenschläfer, zu vermeiden.

Die Verwendung von Ultraschall zum Vertreiben von Tieren hat den Vorteil, dass der Ultraschall bei einer Frequenz oberhalb 22 kHz vom menschlichen Ohr nicht wahrgenommen wird, so dass mit relativ hohen Schalldruckpegeln von typischerweise 100 dB und mehr gearbeitet werden kann, ohne hierdurch eine Menschen störende Lärmemission zu verursachen.

### STAND DER TECHNIK

Eine Vorrichtung zum Vertreiben von Tieren, insbesondere von Mardern, aus dem Motorraum eines Kraftfahrzeugs, die die Merkmale des Oberbegriffs des unabhängigen Patentanspruchs 1 aufweist, ist aus der DE 20 2006 009 649 U1 bekannt. Hier ist eine Ultraschallquelle zur Aussendung von akustischem Ultraschall mit einer Leuchtdiode kombiniert, die in einem aktiven Modus der Vorrichtung alternierend an- und ausgeschaltet wird und dabei Licht mit einer Lichtintensität von mindestens 10 cd abstrahlt.

Das Produkt "Marder und Ungezieferscheuche 12 V/DC" der Firma Kemo Electronic erzeugt einen hohen Ultraschallton von ca. 23 kHz und weist dazu einen Lautsprecher in Form eines Kalotten-Piezo mit einer Aluminiumkalotte auf. Das Produkt "Marder-Stopper" der Firma Kemo Electronic umfasst vier solche Ultraschall-Lautsprecher, um eine gute Verteilung der Ultraschall-Töne beispielsweise in einem Motorraum eines Kraftfahrzeugs zu ermöglichen.

Es ist bekannt, dass eine Schutzwirkung gegenüber Mardern durch Ultraschall nur eintritt, wenn der Schalldruckpegel so hoch ist, dass er den Tieren bei Annäherung Schmerzen verursacht. Da der Schall jedoch durch Hindernisse blockiert und damit wirkungslos wird, ist die Schutzwirkung in einem eng verwinkelten Motorraum schlecht. Wenn mehrere hochwertige Ultraschall-Lautsprecher eingesetzt werden, um diesem Problem zu begegnen, werden Vorrichtungen zum Vertreiben von Mardern teuer und sind aufwändig in ihrer Installation und Deinstallation, beispielsweise vor einer Motorwäsche.

Aus der DE 20 2004 019 616 U1 ist eine Insekten-Vernichtungs-Vorrichtung bekannt, die eine Ultraschallquelle innerhalb eines Parabel-Reflektors aufweist, um den von der Ultraschallquelle ausgesandten Ultraschall auf ein zu tötendes Insekt, beispielsweise eine Kakerlake, zu richten.

### AUFGABE DER ERFINDUNG

Der Erfindung liegt die Aufgabe zugrunde, eine Vorrichtung zum Vertreiben von Tieren, insbesondere Mardern, mit Ultraschall aufzuzeigen, die die Merkmale des Oberbegriffs des unabhängigen Patentanspruchs 1 aufweist und die bei einfacher Installation einen ausreichend hohen Schalldruckpegel in einem großen Umfeld der Vorrichtung bereitstellt.

### LÖSUNG

Die Aufgabe der Erfindung wird durch eine Vorrichtung zum Vertreiben, insbesondere Mardern, mit Ultraschall gelöst, die die Merkmale des unabhängigen Patentanspruchs 1 aufweist. Bevorzugte Ausführungsformen der erfindungsgemäßen Vorrichtung sind in den abhängigen Patentansprüchen definiert.

### BESCHREIBUNG DER ERFINDUNG

Bei einer erfindungsgemäßen Vorrichtung ist in freiem Abstand vor einer Abstrahlfläche für akustischen Ultraschall ein Schallstreukörper angeordnet, der den akustischen Ultraschall durch Reflektion an seiner schallharten Oberfläche in verschiedene seitliche Richtungen verteilt.

Normalerweise ist der Bereich, in dem von einer Ultraschallquelle ein ausreichend hoher Schalldruckpegel zum Vertreiben von Tieren erzeugt wird, keulenförmig und erstreckt sich von der Abstrahlfläche der Ultraschallquelle für akustischen Ultraschall weg. Das heißt, der Ultraschall kann nur einen vergleichsweise kleinen, eng begrenzten Bereich von den störenden Tieren freihalten. Die Idee, beispielsweise in einem Motorraum Reflektionen des Ultraschalls an dort vorhandenen Oberflächen zu nutzen, um ihn weiter zu verteilen, ist selten gut umzusetzen, weil dies voraussetzt, dass der Ultraschall auf schallharte Oberflächen auftrifft, die ihn weitgehend reflektieren statt ihn zu absorbieren. Dies ist bei den im Motorraum üblicherweise verbauten Schalldämmmaterialien und vielen Kunststoffteilen nicht der Fall.

Dieser Problematik weicht die vorliegende Erfindung dadurch aus, dass sie direkt in der Vorrichtung zum Vertreiben von Tieren gegenüber der Abstrahlfläche für akustischen Ultraschall einen Schallstreukörper vorsieht, der eine zur optimalen Reflektion von Ultraschall geeignete schallharte Oberfläche aufweist. Die optimale Ausbildung der Oberfläche bedeutet aber nicht nur, dass sie einen möglichst hohen Anteil des Ultraschalls reflektiert, d. h. möglichst wenig von dem Ultraschall absorbiert, sondern auch, dass der reflektierte Ultraschall eine günstige, d. h. möglichst großräumige Verteilung um die Vorrichtung aufweist. Aufgrund der hohen Freiheitsgrade, die bei der Gestaltung der Oberfläche des Schallstreukörpers gegeben sind, stellt das Erfüllen dieser Anforderungen jedoch kein Problem dar.

Die Abstrahlfläche der Ultraschallquelle umfasst vorzugsweise eine freie Oberfläche eines Ultraschallwandlers. Damit ist die der Umgebungsluft zugewandte Oberfläche gemeint, bei der es sich um die Oberfläche des elektrisch-mechanischen Wandlers des Ultraschallwandlers selbst oder eine darauf aufgebrachte Anpassschicht zur Impedanzanpassung gegenüber Luft handeln kann.

Die Abstrahlfläche der Ultraschallquelle kann eine Ultraschallmembran umfassen, die an einen Ultraschallwandler angrenzt, um die aktive Oberfläche der Ultraschallquelle zu vergrößern. Eine solche Ultraschallmembran ist typischerweise rotationssymmetrisch um den Ultraschallwandler herum ausgebildet. Eine Mantellinie der Ultraschallmembran ist dabei in der Regel gekrümmt. Sie kann insbesondere kreisbogenabschnitt- oder parabelabschnittförmig sein.

Die Oberfläche des Schallstreukörpers verläuft vorzugsweise zumindest überwiegend parallel zu den ihr in Abstandsrichtung gegenüberliegenden Teilen der Abstrahlfläche. Hieraus ergibt sich, dass der Schallstreukörper typischerweise ein spitz auf den Mittelpunkt der Ultraschallquelle zulaufender Rotationskörper ist. Von diesem Rotationskörper wird der Ultraschall allseitig, d. h. kreisförmig verteilt und kann so beispielsweise ohne weiteres den gesamten Bereich unterhalb und parallel zu einer Motorhaube mit Ultraschall mit zum Vertreiben von Tieren ausreichend hohem Schalldruckpegel beaufschlagen.

Der Schallstreukörper kann zum Beispiel über Abstandhalter an einem Gehäuse der Ultraschallquelle gelagert sein. Praktisch wird durch den vor der Ultraschallquelle angeordneten Schallstreukörper die Ultraschallquelle der erfindungsgemäßen Vorrichtung zum Beispiel vor direkter Beaufschlagung mit einem Reinigungswasserstrahl oder dergleichen geschützt.

Der freie Abstand des Schallstreukörpers von der Abstrahlfläche der Ultraschallquelle beträgt typischerweise und vorzugsweise etwa 2 cm, d. h. von 15 bis 25 mm. Die Höhe des Schallstreukörpers liegt typischerweise bei knapp der Hälfte seines Durchmessers, d. h. vorzugsweise zwischen 40 bis 55 % des Durchmessers des Schallstreukörpers an seiner Basis. Dieser Durchmesser liegt bei typischerweise 3 cm, d. h. in einem bevorzugten Bereich von 25 bis 40 mm.

Die Ultraschallquelle der erfindungsgemäßen Vorrichtung muss nicht dauernd betrieben werden. Vielmehr ist ein intermittierenden Betrieb aus Gründen der Energieeinsparung und auch zur Vermeidung eines Gewöhnungseffekts bevorzugt.

Der Schalldruckpegel des von dem Schallstreukörper reflektierten Ultraschalls beträgt 10 cm neben dem Schallstreukörper vorzugsweise noch mindestens 100 dB, noch mehr bevorzugt mindestens 110 dB. Darüber hinaus gehende Werte des Schalldruckpegels sind bevorzugt, um die Reichweite des Ultraschalls in seiner vertreibenden Wirkung zu vergrößern.

Es versteht sich, dass die Vorrichtung weiterhin eine Lichtquelle mit mindestens einer LED aufweisen kann, um eine zusätzliche vertreibende Wirkung durch grelles Licht bereitzustellen. Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Schutzes Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand eines Ausführungsbeispiels unter Bezugnahme auf die beigefügten Zeichnungen näher erläutert und beschrieben.
- **Fig. 1**: ist ein Längsschnitt durch die wesentlichen Bestandteile der erfindungsgemäßen Vorrichtung; und
- **Fig. 2**: ist ein Querschnitt durch die erfindungsgemäße Vorrichtung mit Blick auf die Spitze ihres Schallstreukörpers.

### FIGURENBESCHREIBUNG

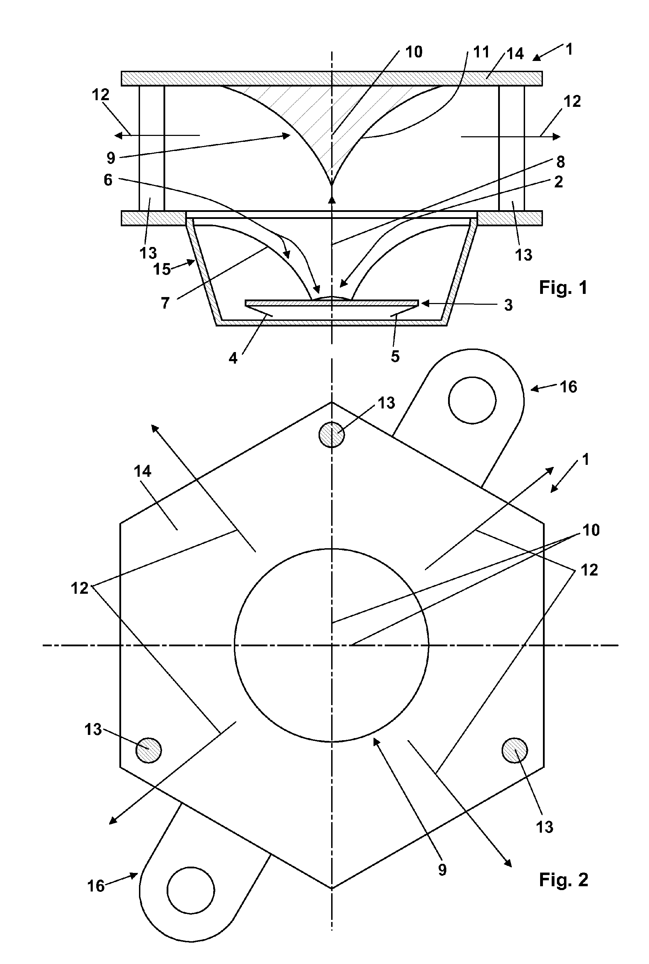

Die in den **Fig. 1 und 2** dargestellte Vorrichtung 1 dient zum Vertreiben von Tieren, insbesondere Mardern, mit Ultraschall. Das Vertreiben kann insbesondere aus Motorräumen von Kraftfahrzeugen erfolgen. Zur Erzeugung des Ultraschalls weist die Vorrichtung 1 eine Ultraschallquelle 2 auf. Diese umfasst einen Ultraschallwandler 3 mit zwei elektrischen Anschlüssen 4, 5. Die Ansteuerung des Ultraschallwandlers 3 über eine geeignete Elektronik ist in den Figuren nicht dargestellt. Auch die rückwärtige Abstützung des Ultraschallwandlers 3 geht aus den Figuren nicht unmittelbar hervor. Die Ultraschallquelle 2 weist eine Abstrahlfläche 6 auf, die eine freie Oberfläche des Ultraschallwandler 5 und eine an ihrem Innenumfang an den Ultraschallwandler 3 angekoppelte Ultraschallmembran 7 umfasst. Beim Ansteuern des Ultraschallwandlers 3 wird Ultraschall längs einer Hauptrichtung 8 von der Abstrahlfläche 6 abgestrahlt. In dieser Hauptrichtung 8 tritt der Ultraschall jedoch nicht aus der Vorrichtung 1 aus, sondern er trifft noch in der Vorrichtung 1 auf einen Schallstreukörper 9, bei dem es sich um einen spitz zulaufenden Rotationskörper mit einer auf die Ultraschallquelle 2 gerichteten Rotationsachse 10 handelt. Die Mantellinie dieses Rotationskörpers, die in dem Längsschnitt gemäß Fig. 1 seiner Oberfläche 11 entspricht, ist konkav gekrümmt und verläuft in einem Abstand von etwa 2 cm im Wesentlichen parallel zu der gegenüberliegenden Abstrahlfläche 6. So wird der von der Ultraschallquelle 2 abgestrahlte Ultraschall durch den Schallstreukörper 9 durch Reflektion in seitliche Richtungen 12 umgelenkt. In diesen seitlichen Richtungen 12 kann der Ultraschall aus der Vorrichtung 1 frei austreten. Er trifft hier allenfalls auf Abstandhalter 13, die eine Grundplatte 14 gegenüber einem Gehäuse 15 der Vorrichtung 1 auf Abstand halten. Während in dem Gehäuse 15 die Ultraschallquelle 2 angeordnet ist, ist an der Grundplatte 14 der Schallstreukörper 9 gelagert. Der hier als massives Bauteil gezeigte Schallstreukörper 9 kann beispielsweise auch aus einem Blech oder einem harten Kunststoff tiefgezogen oder anderweitig geformt sein. An der Grundplatte 14 sind Befestigungslaschen 16 ausgebildet, um die gesamte Vorrichtung an ihrem Einsatzort zu fixieren. Durch die Reflektion des von der Ultraschallquelle 2 erzeugten Ultraschalls an dem Schaltstreukörper 9 kann im gesamten Umkreis der Vorrichtung 1 um die Rotationsachse 10 ein zum Vertreiben von Tieren, insbesondere Mardern, ausreichend hoher Schalldruck von 100 dB, vorzugsweise von 110 dB und mehr bereitgestellt werden.

Die konkreten Abmessungen des Schallstreukörpers 9 sind hier ein Durchmesser an seiner Basis, mit der er an die Grundplatte 14 angrenzt, von 33 mm, eine Höhe über seiner Basis längs der Rotationsachse 10 von 15 mm und ein freier Abstand seiner Oberfläche 11 von der Schallabstrahlfläche 6 der Ultraschallquelle 2 in der Richtung 8 von etwa 2 cm.

### BEZUGSZEICHENLISTE

- 1: Vorrichtung
- 2: Ultraschallquelle
- 3: Ultraschallwandler
- 4: Anschluss
- 5: Anschluss
- 6: Abstrahlfläche
- 7: Ultraschallmembran
- 8: Richtung
- 9: Schallstreukörper
- 10: Rotationsachse
- 11: Oberfläche
- 12: Richtung
- 13: Abstandhalter
- 14: Grundplatte
- 15: Gehäuse
- 16: Befestigungslasche

## Patentansprüche

1. Vorrichtung (1) zum Vertreiben von Tieren, insbesondere Mardern, mit einer Ultraschallquelle (2), die eine Abstrahlfläche (6) für akustischen Ultraschall aufweist, **dadurch gekennzeichnet, dass** in freiem Abstand vor der Abstrahlfläche (6) ein Schallstreukörper (9) angeordnet ist, der den akustischen Ultraschall durch Reflektion an seiner schallharten Oberfläche (11) in verschiedene seitliche Richtungen (12) verteilt.

2. Vorrichtung (1) nach Anspruch 1, **dadurch gekennzeichnet, dass** die Abstrahlfläche (6) eine freie Oberfläche eines Ultraschallwandlers (3) umfasst.

3. Vorrichtung (1) nach Anspruch 1 oder 2, **dadurch gekennzeichnet, dass** die Abstrahlfläche (6) eine Ultraschallmembran (7) umfasst.

4. Vorrichtung (1) nach Anspruch 3, **dadurch gekennzeichnet, dass** die Ultraschallmembran (7) rotationssymmetrisch ist.

5. Vorrichtung (1) nach Anspruch 4, **dadurch gekennzeichnet, dass** die Ultraschallmembran (7) eine gekrümmte, insbesondere eine kreisbogenabschnittförmige oder parabelabschnittförmige, Mantellinie aufweist.

6. Vorrichtung (1) nach einem der vorhergehenden Ansprüche, **dadurch gekennzeichnet, dass** die Oberfläche (11) des Schallstreukörpers (9) zumindest überwiegend parallel zu Teilen der Abstrahlfläche (6) verläuft.

7. Vorrichtung (1) nach einem der vorhergehenden Ansprüche, **dadurch gekennzeichnet, dass** der Schallstreukörper (9) ein spitz auf die Ultraschallquelle (2) zulaufender Rotationskörper ist.

8. Vorrichtung (1) nach einem der vorhergehenden Ansprüche, **dadurch gekennzeichnet, dass** der Schallstreukörper (9) über Abstandhalter (13) an einem Gehäuse (15) der Ultraschallquelle (2) gelagert ist.

9. Vorrichtung (1) nach einem der vorhergehenden Ansprüche, **dadurch gekennzeichnet, dass** der freie Abstand des Schallstreukörpers (9) von der Abstrahlfläche (6) 15 bis 25 mm beträgt.

10. Vorrichtung (1) nach einem der vorhergehenden Ansprüche, **dadurch gekennzeichnet, dass** der Schallstreukörper (9) eine Höhe aufweist, die 40 bis 55 % eines Durchmessers des Schallstreukörpers (9) an seiner Basis beträgt.

11. Vorrichtung (1) nach einem der vorhergehenden Ansprüche, **dadurch gekennzeichnet, dass** ein Durchmesser des Schallstreukörpers (9) an seiner Basis 25 bis 40 mm beträgt.

12. Vorrichtung (1) nach einem der vorhergehenden Ansprüche, **dadurch gekennzeichnet, dass** eine Steuerung zum intermittierenden Betrieb der Ultraschallquelle (2) vorgesehen ist.

13. Vorrichtung (1) nach einem der vorhergehenden Ansprüche, **dadurch gekennzeichnet, dass** der Schalldruckpegel des von dem Schallstreukörper (9) abgestrahlten Ultraschalls 10 cm neben dem Schallstreukörper (9) mindestens 100 dB, vorzugsweise mindestens 110 dB, beträgt.
